# EUROPÄISCHE PATENTSCHRIFT

(11) **EP 4 392 326 B1**
(45) Veröffentlichungstag und Bekanntmachung des Hinweises auf die Patenterteilung: **14.01.2026**
(21) Anmeldenummer: 22803237.1
(22) Anmeldetag: 17.10.2022
(51) Int. Cl.: B64C 27/82

(54) **VERFAHREN ZUR ANSTEUERUNG ZUMINDEST EINES ROTORS EINES FLUGGERÄTS, STEUERUNGSDATENBEREITSTELLUNGSEINHEIT FÜR EIN FLUGGERÄT UND EIN FLUGGERÄT MIT ZUMINDEST EINEM ROTOR**
METHOD FOR CONTROLLING AT LEAST ONE ROTOR OF AN AIRCRAFT, CONTROL DATA PROVISION UNIT FOR AN AIRCRAFT AND AN AIRCRAFT WITH AT LEAST ONE ROTOR
PROCÉDÉ DE COMMANDE D'AU MOINS UN ROTOR D'UN AÉRONEF, UNITÉ DE FOURNITURE DE DONNÉES DE COMMANDE POUR UN AÉRONEF ET UN AÉRONEF AVEC AU MOINS UN ROTOR

(30) Priorität: 09.12.2021 DE 102021214078
(43) Veröffentlichungstag der Anmeldung: 03.07.2024
(73) Patentinhaber: Kopter Germany GmbH, 85635 Höhenkirchen-Siegertsbrunn (DE)
(72) Erfinder: STADLMAIR, Nicolai, 81371 München (DE); REDMANN, Daniel, 85567 Grafing b. München (DE)
(74) Vertreter: Prüfer & Partner mbB Patentanwälte · Rechtsanwälte
(86) Internationale Anmeldenummer: PCT/EP2022/078850
(87) Internationale Veröffentlichungsnummer: WO 2023/104382

(56) Entgegenhaltungen:
- WO-A1-2017/172402
- DE-A1- 102020 201 417

## Beschreibung

Die vorliegende Erfindung betrifft ein Verfahren zur Ansteuerung zumindest eines Rotors eines Fluggeräts, eine Steuerungsdatenbereitstellungseinheit für ein Fluggerät mit zumindest einem Rotor, und ein derartiges Fluggerät.

Ein Beispiel eines solchen Fluggeräts mit zumindest einem Rotor ist ein Hubschrauber, der einen Hauptrotor und einen Heckrotor umfasst. Der Heckrotor des Hubschraubers kann mit einer Ummantelung, d.h. als ein gekapselter Rotor, ausgebildet sein. Hierbei ist der Rotor in einer den Rotor umlaufend radial umgebende Ummantelung oder Rotorverkleidung, beispielsweise in Form einer Hohlstruktur, vorgesehen. Diese Hohlstruktur kann verschiedene Hohlkammern aufweisen. Die Ummantelung bildet zugleich einen sich in axialer Richtung des Rotors erstreckenden Strömungskanal. Durch die Ummantelung kann insbesondere in eine radiale Richtung zum Rotor eine Reduktion der Schallemission im Hinblick auf einen Gesamtschallpegel bzw. Breitbandschall erzielt werden.

Die Schallemission eines ummantelten Rotors wird unter anderem von der Verwirbelung des durchströmten Mediums in einem Spalt, der zwischen der Ummantelung und den Spitzen der Rotorblätter vorgesehen ist, erzeugt. Der so erzeugte Schall weist vorwiegend auftretende diskrete Vorzugsfrequenzen auf, sodass die Schallemission eines ummantelten Rotors in der Regel von tonalen Komponenten, also diskreten Komponenten im Schallspektrum, dominiert ist. Diese einzelnen tonalen Schallkomponenten werden von einem Menschen meist als unangenehm empfunden. Somit kann durch einen ummantelten Rotor zwar einerseits die gesamte abgestrahlte Schallenergie im Vergleich zu einem nicht ummantelten Rotor verringert werden, andererseits wird diese aufgrund der tonalen Komponenten jedoch als unangenehm für das menschliche Ohr empfunden. Dies gilt auch für die Schallemission anderer Fluggeräten mit umhüllten Rotoren, z.B. elektrisch angetriebene Fluggeräte wie Flugtaxis, eVTOL (electric Vertical Take-Off and Landing aircraft), oder Drohnen.

Numerische Simulationen der Aerodynamik und der Akustik eines Rotorsystems sind beispielsweise in den folgenden Dokumenten offenbart:
Stadlmair, N.; Redmann, D., Hirsch, F., Zappek, V. (2021): "Four-step Simulation Toolchain to Assess the Effectivity of Noise Reduction Measures for Shrouded Tail-Rotors", Proceedings of the 47th European Rotorcraft Forum (ERF), United Kingdom*;* und
You, J., Thouault, N., Breitsamter, C., and Adams, N., (2012). "Aeroacoustic analysis of a helicopter configuration with ducted tail rotor". 28th Congress of the International Council of the Aeronautical Sciences 2012*.*

Zur Schallreduktion eines umhüllten Rotorsystems schlägt WO 2021/156077 A1 eine Rotorverkleidung mit einem auf ihrer dem Rotor zugewandten Umlauffläche zumindest abschnittsweise gasdurchlässigen Bereich vor, welcher auch als Liner bezeichnet wird. Durch diese Ausgestaltung der Rotorverkleidung können, in Zusammenwirken mit der Hohlstruktur, zumindest bestimmte Frequenzen im Schallspektrum reduziert werden.

WO 2017/172402 A1 beschreibt Fluggeräte, bei denen die Orientierung einer Antriebswelle und Anstellwinkel der Rotorblätter einstellbar sind. Diese Einstellungen können so gewählt werden, um die Geräuschentwicklung zu beeinflussen.

Sowohl eventuelle Kammern der Hohlstruktur, als auch deren Kombination mit einem Liner haben eine charakteristische und frequenzabhängige Impedanz. Dadurch ergibt sich in der Regel ein komplexer und nicht trivialer Zusammenhang zwischen einem durch den Rotor erzeugten (Vor)-Schub und einer Schallemission des Rotors.

Beispielsweise kann bei einer Verringerung des Abstands der Blattspitzen der Rotorblätter von der Ummantelung das Auftreten von Verwirbelungen des durchströmten Mediums in dem Spalt zwischen Rotorblättern und der Ummantelung, die sogenannten Blattspitzenwirbel, verringert werden und somit eine verringerte Schallerzeugung erzielt werden. Wird beispielsweise eine Drehgeschwindigkeit (Drehzahl) des Rotors verringert, so erhöht sich der effektive Abstand der Blattspitzen der Rotorblätter von der Ummantelung, da sich die radiale Abmessung der Rotorblätter durch die Verringerung der Fliehkraft geringfügig verringert, d.h. die Rotorblätter "längen" sich weniger, was sich innerhalb eines gewissen Drehzahlbereiches negativ auf die Schallerzeugung des ummantelten Rotors durch eine Intensivierung der Blattspitzenwirbel auswirken kann. Bei einer Erhöhung der Drehzahl kann der gegenteilige Effekt auftreten. Zu diesen Effekten der Schallemission kommt noch die Impedanz der Hohlstruktur, gegebenenfalls in Kombination mit einem Liner, die bestimmte Vorzugsfrequenzen aufweist.

Es ist daher eine Aufgabe der vorliegenden Erfindung, ein alternatives oder verbessertes Verfahren zur Ansteuerung zumindest eines Rotors eines Fluggeräts und eine alternative oder verbesserte Steuerungsdatenbereitstellungseinheit für ein Fluggerät mit zumindest einem Rotor bereitzustellen, mit dem/der insbesondere unter Berücksichtigung der speziellen akustischen Charakteristik eines ummantelten Rotors eine Verringerung der Schallemission erzielt werden kann.

Diese Aufgabe wird gelöst durch ein Verfahren gemäß Anspruch 1, eine Steuerungsdatenbereitstellungseinheit gemäß Anspruch 13 und ein Fluggerät gemäß Anspruch 14. Weitere Merkmale der Erfindung sind in den Unteransprüchen angegeben. Dabei kann das erfindungsgemäße Verfahren auch durch Merkmale der Steuerungsdatenbereitstellungseinheit und/oder des Fluggeräts weitergebildet sein und umgekehrt, und Merkmale der Steuerungsdatenbereitstellungseinheit und des Fluggeräts können auch untereinander zur Weiterbildung genutzt werden.

Ein erfindungsgemäßes Verfahren dient der Ansteuerung zumindest eines Rotors eines Fluggeräts, wobei der Rotor dazu ausgebildet ist, ein auf das Fluggerät wirkendes Drehmoment auszugleichen oder zumindest zu verringern, der Rotor mit einer Ummantelung versehen ist, und eine Drehzahl des Rotors und ein Anstellwinkel zumindest eines Rotorblattes des Rotors für den Rotor einstellbar sind, insbesondere unabhängig von einem weiteren an dem Fluggerät vorgesehenen Rotor einstellbar sind. Das Verfahren umfasst die folgenden Schritte:
(a) Festlegen zumindest eines ersten Betriebsparameterwertepaars und zumindest eines zweiten Betriebsparameterwertepaars des Rotors, welche jeweils unterschiedliche Drehzahlen und Anstellwinkel des Rotors bei einem gleichen dadurch erzielten Schubwert spezifizieren,
(b) Ermitteln einer ersten Schallkennzahl für das erste Betriebsparameterwertepaar und einer zweiten Schallkennzahl für das zweite Betriebsparameterwertepaar, wobei das Ermitteln eine Messung eines Schallwerts des Rotors in einer Testanordnung umfasst,
(c) Speichern der ersten und zweiten Schallkennzahlen unter Zuordnung zu dem jeweiligen Betriebsparameterwertepaar, und
(d) Ansteuern des Rotors im Betrieb des Fluggeräts, unter Bezugnahme auf die im Schritt c) gespeicherte Zuordnung und in Abhängigkeit der selektiv zu erzielenden zumindest ersten oder zweiten Schallkennzahl, gemäß dem ersten Betriebsparameterwertepaar oder dem zweiten Betriebsparameterwertepaar.

Vorzugsweise werden in dem Verfahren die die Schritte a) bis c) für mehr als zwei Betriebsparameterwertepaare und entsprechende Schallkennzahlen, und/oder für mehrere zu erzielende Schubwerte durchgeführt.

Das Fluggerät kann beispielsweise ein Hubschrauber sein. Alternativ kann das Fluggerät ein anderes Fluggerät sein, beispielsweise ein Flugtaxi, eVTOL (electric Vertical Take-Off and Landing aircraft), oder eine Drohne.

Der Rotor muss nicht ausschließlich dem Drehmomentausgleich dienen. Der Rotor kann beispielsweise dazu ausgebildet sein, zusätzlich zu dem Drehmomentausgleich auch dem Erzeugen eines dynamischen Auftriebs und/oder einer Horizontalbewegung des Fluggeräts zu dienen.

Unter einem Ausgleich oder einer Verringerung eines auf das Fluggerät wirkenden Drehmoments wird insbesondere verstanden, einer Drehung des Fluggeräts um dessen Gierachse (z-Achse bzw. vertikale Richtung), welche insbesondere durch einen weiteren an dem Fluggerät vorgesehenen Rotor, z.B. einen Hauptrotor des Fluggeräts, erzeugt wird, entgegenzuwirken. Hierfür wird durch den Rotor beispielsweise ein horizontaler Schub erzeugt, der dem Drehmoment entgegenwirkt. Beispielsweise kann der Rotor zum Drehmomentausgleich als ein Sekundär-Rotor, insbesondere als ein Heckrotor, des Fluggeräts bereitgestellt sein, welcher z.B. an einem Heckausleger des Fluggeräts, insbesondere eines Hubschraubers, vorgesehen ist.

Der Anstellwinkel zumindest eines Rotorblattes des Rotors kann beispielsweise für den Rotor individuell einstellbar sein, d.h. unabhängig von weiteren Rotorblättern desselben Rotors. Es können jedoch auch alle Rotorblätter des Rotors in ihren Anstellwinkeln einstellbar sein, insbesondere kollektiv einstellbar, d.h. für alle Rotorblätter des Rotors wird zeitgleich derselbe Anstellwinkel eingestellt. Eine derartige Einstellbarkeit des oder der Anstellwinkel erfolgt bevorzugt für den Rotor separat, d.h. unabhängig von einem oder mehreren weiteren an dem Fluggerät vorgesehenen Rotoren und unabhängig von einer etwaigen Einstellbarkeit des/der Anstellwinkel von Rotorblättern dieses oder dieser weiteren Rotoren.

Die Ummantelung des Rotors bezeichnet vorzugsweise eine Struktur, welche den Rotor in dessen Umlaufrichtung umgibt. Vorzugsweise begrenzt die Ummantelung einen sich in axialer Richtung einer Rotationsachse des Rotors erstreckenden Luftkanal des Rotors. Die Ummantelung kann beispielsweise eine zylindrische Form oder die Form eines Torus aufweisen, insbesondere als ein zylindrisches bzw. Torus-förmiges Gehäuse ausgebildet sein. Die Ummantelung kann auch von einer zylindrischen oder Torusform abweichen und beispielsweise hinsichtlich ihrer aerodynamischen Eigenschaften optimiert ausgebildet sein. Generell kann die Ummantelung jede geeignete Form aufweisen. Durch eine derartige Ummantelung können beispielsweise Schubverluste infolge von Verwirbelungen an den Blattspitzen des Propellers reduziert werden, und die Sicherheit kann erhöht werden. Alternativ oder zusätzlich kann durch eine Durchströmung des durch die Ummantelung ausgebildeten Kanals bzw. Luftkanals ein zusätzlicher, und insbesondere nicht zu vernachlässigender, Schub erzeugt werden. Ein derartiger zusätzlicher Schub kann beispielsweise 50 % oder mehr eines Gesamtschubes betragen.

Ein im Schritt (b) gemessener Schallwert kann insbesondere ein Schalldruck sein. Vorzugsweise wird der Schallwert bzw. Schalldruck zeitaufgelöst gemessen, beispielsweise mittels eines Messgeräts, insbesondere eines oder mehrerer Mikrofone. Der Schallwert kann beispielsweise auch eine Tonalität und/oder ein Gesamtpegel der Schallemission des Rotors sein. Die aus dem Schallwert ermittelte Schallkennzahl kann beispielsweise der gemessene Schallwert selbst sein, oder eine Kennzahl, welche z.B. unter Berücksichtigung mehrerer Messwerte, d.h. Schallwerte, verschiedener Schallsensoren bzw. Messgeräte und/oder deren relative Position zueinander oder in Bezug auf den Rotor berücksichtigt. Insbesondere kann die Schallkennzahl aus dem gemessenen Schallwert durch eine geeignete Datenverarbeitungsroutine ermittelt werden.

Das Ermitteln der Schallkennzahl in dem beschriebenen Verfahren erfolgt insbesondere durch Messung eines Schallwerts, insbesondere eines Schalldrucks, des Rotors in einer Testanordnung. Die Testanordnung kann insbesondere einen Prüfstand umfassen, wie z.B. einen Komponentenprüfstand oder Einzelkomponentenprüfstand, in dem z.B. der Rotor als eine Komponente mit etwaigen weiteren Komponenten (z.B. der Ummantelung) angeordnet ist. Ein derartiger Komponentenprüfstand ist insbesondere zur Durchführung akustischer Messungen ausgebildet, beispielsweise mittels geeigneter Messgeräte, wie Schallmessgeräte. Alternativ oder zusätzlich kann der Prüfstand einen Windkanal umfassen. Vorzugsweise wird die Messung eines Schallwerts des Rotors im Schritt (b) an einem Prüfstand durchgeführt, wobei zumindest ein Messgerät zur Erfassung des Schallwerts an einer vorab festgelegten Position in Bezug auf die Position des Rotors in dem Prüfstand angeordnet ist.

Somit wird das Verfahren, welches insbesondere der Verringerung einer Schallemission des Fluggerätes dienen kann, nicht während des Flugbetriebs des Fluggeräts selbst durchgeführt, sondern es werden vorab, d.h. insbesondere am Boden, in Bezug auf den Rotor entsprechende Daten erfasst und ausgewertet. Somit werden in dem Verfahren beispielsweise Kennfelder offline, d.h. nicht während des Flugbetriebs, generiert, und liegen somit vor einem realen Flug des Fluggerätes vor. Das Verfahren unterscheidet sich somit insbesondere von einem regelungsbasierten Verfahren zur Verringerung einer Schallemission, welches auf einer Änderung von Steuerdaten während des Fluges basierend auf während des Fluges erfassten Messwerten basiert. Somit sind keine komplexen und/oder teuren Einrichtungen wie z.B. Mikrofone, Lautsprecher, adaptive Regler, etc. am Fluggerät erforderlich.

Auch sind keine aufwändigen Flugmesskampagnen für Referenzmessungen erforderlich, um eine Verringerung der Schallemissionen des Fluggerätes zu erzielen. Vielmehr kann das oben beschriebene Verfahren beispielsweise anhand von Messungen, insbesondere einfach durchzuführenden Sweep-Messungen, in einer Testumgebung wie z.B. einem Komponentenprüfstand durchgeführt werden. Dies hat zudem den Vorteil, dass in dem Verfahren ermittelte Steuerdaten, die zur Ansteuerung des Rotors im Flugbetrieb des Fluggeräts vorgesehen sind, bei Bedarf jederzeit erneuert oder geupdated werden können, um z.B. weitere Optimierungspunkte etc. hinzuzufügen.

Durch die Einstellbarkeit, oder individuelle Einstellbarkeit, der Drehzahl und des Anstellwinkels zumindest eines Rotorblattes des Rotors kann beispielsweise ein zusätzlicher Freiheitsgrad erzielt werden. Beispielsweise kann durch Anpassen der Blattanstellwinkel ein im Wesentlichen konstanter Schub für verschiedene Drehzahlen erzielt werden, oder umgekehrt. Dies bedeutet insbesondere, dass ein vorab festgelegter Schubwert durch unterschiedliche Kombinationen von Blattanstellwinkel und Drehzahl, auch als Betriebsparameterwertepaare bezeichnet, erzielt werden kann. Durch das hier beschriebene Verfahren kann die Auswahl eines Betriebsparameterwertepaares für einen zu erzielenden Schubwert so erfolgen, dass eine Verbesserung, insbesondere Minimierung, einer Schallemission durch den Rotor, wie z.B. einen Sekundär-Rotor, insbesondere den Heckrotor, im Flugbetrieb erzielt werden kann. Durch das Verfahren kann zudem eine komplexe akustische Charakteristik eines ummantelten Rotors auf einfache Art und Weise berücksichtigt werden. Insbesondere kann beispielsweise eine frequenzabhängige akustische Signatur des ummantelten Rotors durch das Verfahren dahingehend vorteilhaft angewandt werden, dass der Rotor im Betrieb so angesteuert wird, dass die frequenzabhängigen Dämpfungseigenschaften der Ummantelung ausgenutzt werden. Bevorzugt wird daher der Rotor im Schritt (d) so angesteuert, dass Frequenzen der Schallemission des Rotors, die durch die Ummantelung nicht bevorzugt gedämpft werden, vermieden werden. Anders ausgedrückt wird der Rotor im Schritt (d) so angesteuert, dass durch den Rotor im Wesentlichen eine Schallemission mit Frequenzen erzeugt wird, die durch die Ummantelung, vorzugsweise bei Verwendung eines Liners, gedämpft werden.

Vorzugsweise erfolgt die Ansteuerung des zumindest einen Rotors gemäß Schritt (d) zumindest zeitweise zu einem Zeitpunkt, zu dem sich das Fluggerät im Schwebeflug befindet. Als Schwebeflug wird insbesondere ein Zustand des Fluggeräts verstanden, in dem dieses an einer im Wesentlichen unveränderten Horizontal- und Vertikalposition verbleibt. Im Schwebeflug des Fluggeräts können beispielsweise erhöhte Blattlasten des Rotors erforderlich sein, welche mit einer hohen tonalen Schallkomponente einhergehen können, bei zugleich langer Verweildauer des Fluggeräts über derselben Position am Boden. Daher kann eine Minimierung der Schallemission des Fluggeräts im Schwebeflug besonders wünschenswert sein.

Vorzugsweise umfasst in dem Verfahren die Zuordnung in Schritt c) eine graphische und/oder tabellarische Darstellung der Schallkennzahlen in Abhängigkeit der Drehzahlen und/oder der Anstellwinkel des Rotors und/oder der dadurch erzielten Schubwerte. Eine graphische Darstellung kann beispielsweise eine Darstellung einer oder mehrerer Funktionen oder Messkurve(n) sein. Dadurch kann beispielsweise eine einfachere Darstellung der jeweiligen Werte bereitgestellt sein, und/oder eine Interpolation von gemessenen Werten vereinfacht werden.

Vorzugsweise wird die im Schritt c) gespeicherte Zuordnung durch weitere Schallkennzahlen und/oder Betriebsparameterwertepaare und/oder Schubwerte ergänzt, die in einer numerischen Simulation und/oder durch Interpolation ermittelt werden. Eine numerische Simulation kann insbesondere eine Simulation der Aerodynamik des Rotorsystems (Computational Fluid Dynamics, cfd) und/oder eine Simulation der Akustik (Computational Aeroacoustics, caa) des Rotorsystems umfassen. Durch eine derartige Simulation und/oder Interpolation kann beispielsweise ein Messaufwand verringert werden. Beispiele derartiger numerischer Simulationen sind in den eingangs genannten Dokumenten beschrieben.

Vorzugsweise wird im Schritt d) die der Ansteuerung des Rotors zugrundeliegende Schallkennzahl so gewählt, dass eine Verringerung der Schallemission des Rotors erzielt wird. Hierfür kann beispielsweise in der Testumgebung für einen vorab festgelegten zu erzielenden Schub des Rotors dieser mit verschiedenen Betriebsparameterwertepaaren, welche den gewünschten Schub erzeugen, angesteuert werden und die entsprechenden Schallkennzahlen ermittelt werden. Dementsprechend wird dann bevorzugt dasjenige Betriebsparameterwertepaar für eine spätere Ansteuerung des Rotors im Flugbetrieb ausgewählt, für das die kleinste Schallkennzahl ermittelt wurde. Damit ist es beispielsweise möglich, eine Schallemission auf einfache Art und Weise zu verringern.

Vorzugsweise umfassen die Schallkennzahlen eine Tonalität und/oder einen Gesamtpegel der Schallemission des Rotors. Durch eine Verringerung der Tonalität kann eine durch das Fluggerät im Betrieb verursachte Schallerzeugung beispielsweise für das menschliche Ohr weniger unangenehm erscheinen. Durch eine Verringerung des Gesamtpegels kann beispielsweise eine Gesamtlautstärke der Schallemission vermindert werden.

Eine Tonalität der Schallemission ist vorzugsweise definiert als die Differenz eines Spitzenschallpegels und eines Breitbandlärmpegels der Schallemission. Vorzugsweise wird der Spitzenschallpegel an einer definierten Frequenz des gemessenen Frequenzspektrums ermittelt. Beispielsweise kann die definierte Frequenz für den Spitzenschallpegel eine charakteristische Blattpassierfrequenz des zumindest einen Rotorblattes bzw. der Rotorblätter sein. Diese charakteristischen Blattpassierfrequenzen ergeben sich unter anderem aus der Anzahl der Rotorblätter, deren Winkelabstände zueinander und der Rotordrehzahl. Die Tonalität kann aber auch mehrere Frequenzen berücksichtigen. In diesem Fall wird das arithmetische Mittel der Differenzen zwischen dem jeweiligen Spitzenschallpegel und des Breitbandlärmpegels über eine Mehrzahl an Frequenzen gebildet. Die arithmetische Mittelung kann insbesondere auf einen vorab festgelegten Frequenzbereich beschränkt sein.

Vorzugsweise wird das Verfahren unter Verwendung eines Rotors durchgeführt, dessen Ummantelung durch eine in Bezug auf eine Rotationsachse des Rotors umlaufende Hohlstruktur gebildet ist, wobei die Hohlstruktur vorzugsweise auf ihrer dem Rotor zugewandten Umlauffläche zumindest abschnittsweise einen gasdurchlässigen Bereich aufweist, wobei weiter bevorzugt die Hohlstruktur so ausgebildet ist, dass durch den gasdurchlässigen Bereich in die Hohlstruktur eindringende akustische Wellen zumindest einer Frequenz durch die Hohlstruktur zumindest teilweise absorbiert werden. Der Rotor und seine Ummantelung werden auch als ein Rotorsystem bezeichnet. Der gasdurchlässige Bereich, z.B. eine abschnittsweise Mikroperforation einer Fläche der Ummantelung, wird auch als ein Liner bezeichnet und kann beispielsweise bewirken, dass durch die Drehung des Rotors generierte Rotorblattspitzenwirbel in die Hohlstruktur der Ummantelung eingeleitet werden können. Insbesondere kann durch diese Ausgestaltung der Ummantelung eine frequenzabhängige Dämpfung der Schallabgabe des Rotors erzielt werden. Das beschriebene Verfahren erweist sich besonders vorteilhaft für ein derartiges Rotorsystem, da durch das Verfahren gezielt jene Betriebsparameterwertepaare ausgewählt werden können, deren Schallerzeugung im Betrieb des Rotors besonders gut durch die Ummantelung gedämpft werden können.

Vorzugsweise ist das Fluggerät als ein Hubschrauber ausgebildet und der Rotor ist ein Sekundär-Rotor, der zum Drehmomentenausgleich und einer Steuerung um eine Gierachse ausgebildet ist, weiter bevorzugt ein Heckrotor, des Hubschraubers, wobei weiter bevorzugt der Hubschrauber einen separaten Antrieb, insbesondere einen Elektromotor, umfasst, der dazu ausgebildet ist, den Sekundär-Rotor gemäß einer vorgegebenen Drehzahl in Drehung zu versetzen. Durch die Bereitstellung eines separaten Antriebs für den Sekundär-Rotor, insbesondere den Heckrotor, kann beispielsweise eine separate Einstellbarkeit der Drehzahl des Rotors auf einfache Art und Weise realisiert werden.

Vorzugsweise ist der Rotor ein erster Rotor des Fluggeräts und das Fluggerät umfasst zumindest einen zweiten Rotor, der dazu ausgebildet ist, ein auf das Fluggerät wirkendes Drehmoment auszugleichen oder zumindest zu verringern, wobei der zweite Rotor mit einer Ummantelung versehen ist, und eine Drehzahl des zweiten Rotors und ein Anstellwinkel zumindest eines Rotorblattes des zweiten Rotors, vorzugsweise ein einheitlicher Anstellwinkel aller Rotorblätter des zweiten Rotors, für den zweiten Rotor unabhängig von dem ersten Rotor einstellbar sind, und wobei vorzugsweise die Schritte a) bis d) für den ersten und den zumindest zweiten Rotor separat durchgeführt werden oder unter Messung eines Gesamtschallwerts der zumindest zwei Rotoren. Mit anderen Worten ist die vorliegende Erfindung auch auf Fluggeräte mit mehreren ummantelten Rotoren, auch als Multi-Rotor-Systeme bezeichnet, anwendbar. Durch die Verwendung mehrerer ummantelter Rotoren kann beispielsweise ein zusätzlicher Freiheitsgrad zur Verringerung der Schallemissionen bereitgestellt sein, da es z.B. jeweils mehrere Möglichkeiten zur Kombination der einzeln ansteuerbaren Rotoren gibt.

Gemäß vorliegender Erfindung ist eine Steuerungsdatenbereitstellungseinheit für ein Fluggerät mit zumindest einem Rotor vorgesehen, wobei der Rotor dazu ausgebildet ist, ein auf das Fluggerät wirkendes Drehmoment auszugleichen oder zumindest zu verringern, der Rotor mit einer Ummantelung versehen ist, und eine Drehzahl des Rotors und ein Anstellwinkel zumindest eines Rotorblattes des Rotors für den Rotor einstellbar sind, insbesondere unabhängig von einem weiteren an dem Fluggerät vorgesehenen Rotor. Die Steuerungsdatenbereitstellungseinheit umfasst
(a) eine Festlegungseinheit zum Festlegen zumindest eines ersten Betriebsparameterwertepaars und zumindest eines zweiten Betriebsparameterwertepaars des Rotors, welche jeweils unterschiedliche Drehzahlen und Anstellwinkel des Rotors bei einem gleichen dadurch erzielten Schubwert spezifizieren,
(b) eine Ermittlungseinheit zum Ermitteln einer ersten Schallkennzahl für das erste Betriebsparameterwertepaar und einer zweiten Schallkennzahl für das zweite Betriebsparameterwertepaar, wobei das Ermitteln eine Messung eines Schallwerts des Rotors in einer Testanordnung umfasst,
(c) eine Speichereinheit zum Speichern der ersten und zweiten Schallkennzahlen unter Zuordnung zu dem jeweiligen Betriebsparameterwertepaar, und
(d) eine Ausgabeeinheit zum Ausgeben von Steuerungsdaten zum Ansteuern des Rotors im Betrieb des Fluggeräts, wobei die Steuerungsdaten, unter Bezugnahme auf die in der Speichereinheit gespeicherte Zuordnung und in Abhängigkeit der selektiv zu erzielenden zumindest ersten oder zweiten Schallkennzahl, die Ansteuerung des Rotors gemäß dem ersten Betriebsparameterwertepaar oder dem zweiten Betriebsparameterwertepaar spezifizieren.

Mit einer derartigen Steuerungsdatenbereitstellungseinheit können beispielsweise dieselben Wirkungen und Vorteile wie mit dem oben beschriebenen Verfahren erzielt werden.

Ein Fluggerät gemäß vorliegender Erfindung umfasst zumindest einen Rotor, der dazu ausgebildet ist, ein auf das Fluggerät wirkendes Drehmoment auszugleichen oder zumindest zu verringern, wobei der Rotor mit einer Ummantelung versehen ist, und eine Drehzahl des Rotors und ein Anstellwinkel zumindest eines Rotorblattes des Rotors für den Rotor einstellbar sind, insbesondere unabhängig von einem weiteren an dem Fluggerät vorgesehenen Rotor. Weiter weist das Fluggerät eine Steuereinheit auf, die den zumindest einen Rotor im Betrieb des Fluggeräts zumindest zeitweise mittels von einer erfindungsgemäßen Steuerungsdatenbereitstellungseinheit bereitgestellten Steuerungsdaten ansteuert und/oder gemäß Schritt (d) eines erfindungsgemäßen Verfahrens ansteuert. Vorzugsweise erfolgt die Ansteuerung des zumindest einen Rotors zumindest im Schwebeflug des Fluggeräts mittels von der Steuerungsdatenbereitstellungseinheit bereitgestellten Steuerungsdaten und/oder gemäß dem Schritt (d).

Weitere Merkmale und Zweckmäßigkeiten der Erfindung werden nachfolgend auch anhand eines Ausführungsbeispiels unter Bezugnahme auf die Zeichnungen beschrieben.
Fig. 1 zeigt eine schematische Ansicht eines Fluggeräts mit einem Rotor, welcher zur Durchführung eines erfindungsgemäßen Verfahrens und zur Verwendung mit einer erfindungsgemäßen Steuerungsdatenbereitstellungseinheit geeignet ist;
Fig. 2 zeigt eine schematische, perspektivische Ansicht des in Fig. 1 gezeigten Rotors;
Fig. 3 zeigt eine schematische, perspektivische und teilweise im Schnitt dargestellte Ansicht eines Abschnitts der in Fig. 1 und 2 gezeigten Ummantelung und eines Rotorblattes;
Fig.4 zeigt eine schematische Querschnittsansicht der in Fig. 1 bis 3 gezeigten Ummantelung und eines Abschnitts eines Rotorblattes;
Fig. 5 zeigt eine schematische Darstellung eines erfindungsgemäßen Verfahrens unter Verwendung eines in den Fig. 1 bis 4 dargestellten Rotors, und
Fig. 6 zeigt eine schematische Darstellung einer Steuerungsdatenbereitstellungseinheit gemäß der vorliegenden Erfindung,
Fig. 7a bis 7c zeigen schematische, beispielhafte Diagramme, die durch ein in Fig. 5 gezeigtes Verfahren erstellt werden, und
Fig. 8 zeigt eine schematische, beispielhafte Tabelle, welche basierend auf die in Fig. 7a bis 7c gezeigten Diagramme erstellt wurde und zur Ansteuerung des in den Figuren 1 bis 4 gezeigten Fluggeräts verwendet werden kann.

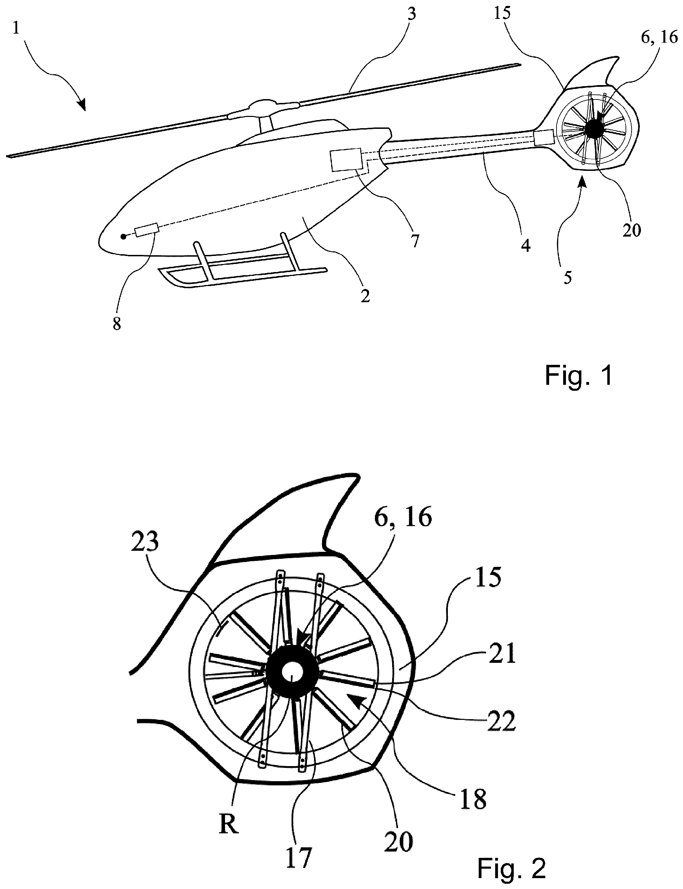

Im Folgenden wird mit Bezug auf Fig. 1 bis 4 ein Fluggerät beschrieben, das zur Durchführung eines erfindungsgemäßen Verfahrens und zur Verwendung mit einer erfindungsgemäßen Steuerungsdatenbereitstellungseinheit geeignet ist. Das in den Figuren gezeigte Fluggerät ist ein Hubschrauber 1. Der in Fig. 1 gezeigte Hubschrauber 1 weist einen Rumpf 2 mit einem Hauptrotor 3 auf, und einen Heckausleger 4, an dem ein Heckrotor 5 vorgesehen ist. Der Heckrotor 5 ist mit einer Ummantelung 15 versehen, welche den Heckrotor umlaufend umgibt. Der Hauptrotor 3 dient im Wesentlichen der Erzeugung eines dynamischer Auftriebs und gegebenenfalls einer Horizontalbewegung des Hubschraubers 1, und der Heckrotor 5 dient zumindest zum Ausgleichen eines auf den Rumpf 2 wirkenden Drehmoments, insbesondere zum Ausgleichen eines durch den Hauptrotor 3 erzeugten Gegendrehmoments, das eine der Rotation des Hauptrotors entgegengesetzte Drehung des Rumpfes 2 bewirken würde.

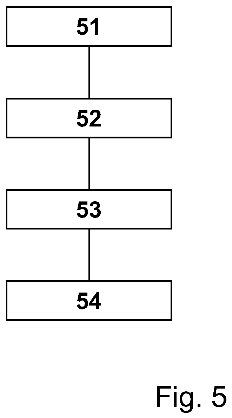

Weiter ist der Heckrotor 5 unabhängig von dem Hauptrotor 3 antreibbar, d.h. nicht mit diesem gekoppelt, insbesondere nicht mechanisch mit diesem gekoppelt. Hierzu weist der Hubschrauber 1 gemäß Fig. 1 einen Antrieb 6, insbesondere einen Elektromotor, auf, der dazu ausgebildet ist, den Heckrotor 5 gemäß einer vorgegebenen Drehzahl in Drehung zu versetzen. In Fig. 1 ist der Antrieb 6 an oder in einer Rotornabe 16 des Heckrotors 5 vorgesehen. Alternativ kann der Antrieb 6 auch an einer anderen Stelle des Hubschraubers 1 als der Rotationsnabe vorgesehen sein, wobei eine Antriebskraft des Antriebs 6 dann an den Heckrotor 5 weitergeleitet wird. In der Ausführungsform gemäß Fig. 5 weist der Hubschrauber 1 weiter einen Energiespeicher 7, hier in Form einer Batterie, auf, welche den Antrieb 6 mit Energie, insbesondere elektrischer Energie, versorgt.

Der Hubschrauber 1 weist weiter eine Steuereinheit 8 auf, mit der die einzelnen Komponenten des Hubschraubers, insbesondere der Antrieb 6 des Heckrotors 5 und ein in den Figuren nicht gezeigter Antrieb des Hauptrotors 3, koordiniert gesteuert werden können, wie in Fig. 1 durch einen Pfeil angedeutet. Insbesondere kann die Steuereinheit eine Drehzahl des Heckrotors 5 und Blattanstellwinkel für den Heckrotor 5 (s.u.) vorgeben. Der Begriff "Steuereinheit" bezeichnet in vorliegender Anmeldung eine computergestützte Steuerung, die dazu ausgebildet ist, den Betrieb des Hubschraubers oder einer oder mehrerer Komponenten des Hubschraubers zu steuern. Hierzu kann die Steuereinheit 8 beispielsweise einen Prozessor, einen Speicher und eine Ausgangsschnittstelle umfassen. Beispielsweise kann die Steuereinheit 8 ein Computer sein. Die Steuereinheit kann zum Beispiel einen zentralen Prozessor (CPU) enthalten, dessen Betrieb durch ein Computerprogramm (Software) gesteuert wird. Das Computerprogramm kann getrennt von der Steuereinheit auf einem Speichermedium oder einem Server gespeichert sein, von dem es in die Steuereinheit 8 geladen werden kann, und/oder das Computerprogramm kann über ein Netzwerk, beispielsweise das Internet, in die Steuereinheit 8 geladen werden.

Der Heckrotor 5 wird im Folgenden mit Bezug auf die Figuren 2 bis 4 näher beschrieben. Der Heckrotor 5 weist mehrere Rotorblätter 20 auf, die um die Rotornabe 16 herum angeordnet sind, und sich radial von der Rotornabe 16 in Richtung der Ummantelung 15 erstrecken. Eine radiale Erstreckung der Rotorblätter 20 ist so bemessen, dass die der Ummantelung 15 zugewandten Enden der Rotorblätter 20, welche auch als Rotorblattspitzen 21 bezeichnet werden, in einem Abstand zu der Ummantelung 15 vorgesehen sind. Somit ist ein Spalt 22 zwischen den Rotorblattspitzen 21 und der Ummantelung 15 vorgesehen, welcher auch als Blattspitzenabstand bezeichnet wird. Die Rotornabe 16 wird durch vorzugsweise mehrere Tragstreben oder Statoren 17 gehalten und ist um eine Rotationsachse R, welche in Fig. 2 senkrecht zur Zeichnungsebene verläuft, drehbar.

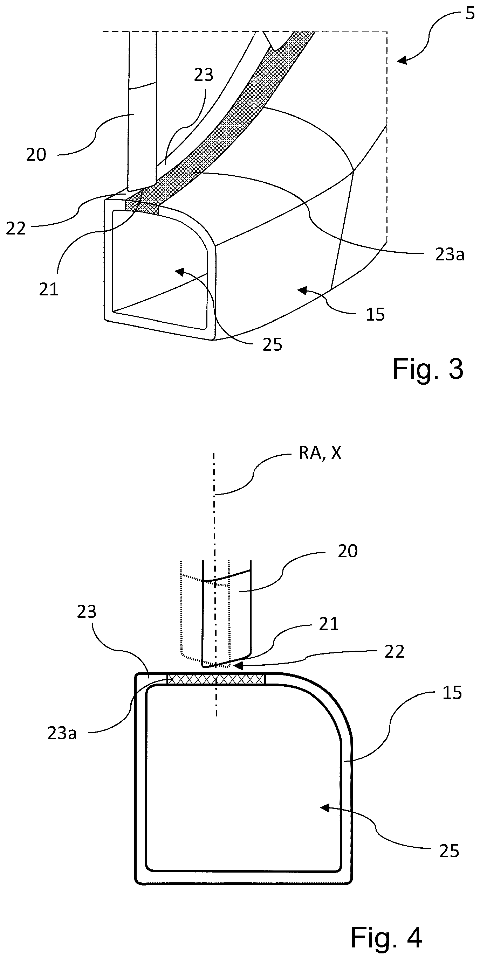

Die Ummantelung 15 umgibt den Heckrotor 5 in Bezug auf die Rotationsachse R in Umlaufrichtung und begrenzt einen sich in axialer Richtung der Rotationsachse R erstreckenden Luftkanal 18 des Heckrotors 5. Wie weiter aus Fig. 3 und 4 ersichtlich, weist in der durch die Rotorblätter 20 gebildeten Rotorebene RA senkrecht zur Rotationsachse R die dem Heckrotor 5 zugewandte Umlauffläche 23 der Ummantelung 15 einen gasdurchlässigen Bereich 23a auf, der durch die Rotorebene RA geschnitten wird und sich in Bezug auf die Rotationsachse R axial zu beiden Seiten der Rotorebene RA erstreckt. Beispielsweise kann der gasdurchlässige Bereich 23a durch ein Lochblech mit Mikroperforationen ausgebildet sein, das in die Ummantelung 15 eingesetzt und fixiert ist. Die durch die Mikroperforation eingebrachte Porosität beträgt beispielsweise 50% und ist in Umlaufrichtung sowie in axialer Richtung in Bezug auf die Rotationsachse R vorzugsweise konstant. Der gasdurchlässige Bereich 23a überdeckt die radiale Projektion der Rotorblattspitzen 21 der Rotorblätter 20, sodass in dem Spalt 22 zwischen den Rotorblattspitzen 21 und dem gasdurchlässigen Bereich 23a generierte Rotorblattspitzenwirbel durch den gasdurchlässigen Bereich 23a in eine durch die Ummantelung 15 gebildete Hohlstruktur 25 eingeleitet werden können.

Alternativ zu der oben beschriebenen Ausgestaltung der Ummantelung 15 kann diese auch ohne den gasdurchlässigen Bereich 23a ausgebildet sein. Auch kann die Ummantelung 15 keine Hohlstruktur bilden, sondern z.B. als ein durchgehender Körper ausgebildet sein.

Wie in Fig. 4 schematisch dargestellt sind die Anstellwinkel der Rotorblätter 20 des Heckrotors 5 variabel bzw. einstellbar. Die Einstellbarkeit der Anstellwinkel kann beispielsweise durch einen separat bereitgestellten Blattanstellwinkelantrieb (in den Figuren nicht gezeigt), und entsprechende Ansteuerung durch die Steuereinheit 8 realisiert sein. Der Anstellwinkel eines Rotorblatts 20 wird durch eine Rotation des Rotorblatts 20 um eine radiale Achse X, die senkrecht zur Rotationsachse R des Heckrotors 5 verläuft, geändert. Fig. 4 zeigt schematisch mit durchgezogener Linie ein Rotorblatt in einem ersten Anstellwinkel, und mit gestrichelter Linie dasselbe Rotorblatt 20 in einem zweiten Anstellwinkel, der sich von dem ersten Anstellwinkel unterscheidet.

Durch die Kombination der Einstellbarkeiten der Blattanstellwinkel und der Drehzahl des Heckrotors 5 kann ein zusätzlicher Freiheitsgrad gegenüber Heckrotoren, die in ihrem Betrieb mit der Rotation des Hauptrotors gekoppelt sind, erzielt werden. Beispielsweise kann durch diese Kombination durch Anpassen der Blattanstellwinkel ein im Wesentlichen konstanter Schub für verschiedene Drehzahlen erzielt werden, oder umgekehrt. Mit anderen Worten kann ein vorab festgelegter Schubwert durch unterschiedliche Kombinationen von Blattanstellwinkel und Drehzahl, im Folgenden auch als Betriebsparameterwertepaar bezeichnet, erzielt werden. Die Auswahl eines Betriebsparameterwertepaares erfolgt für einen zu erzielenden Schubwert so, dass eine Verbesserung, insbesondere Minimierung, einer Schallemission durch den Heckrotor 5 erzielt wird, wie weiter unten näher beschrieben.

Optional kann die durch die Ummantelung 15 gebildete Hohlstruktur 25 in den Figuren nicht gezeigte Versteifungselemente und/oder Hohlstrukturelemente aufweisen, welche beispielsweise als Blenden dienen und hinsichtlich ihrer Dimensionierung und Positionierung ebenfalls Einfluss auf die Dämpfung in die Hohlstruktur eingeleiteter bzw. sich darin ausbreitender akustischer Wellen nehmen können, und/oder die Kammern in der Hohlstruktur 25 ausbilden, um beispielsweise jeweils lokal unterschiedliche Resonatorvolumina zu bilden und hierdurch die Dämpfung von Frequenzen zu beeinflussen.

Im Folgenden wird mit Bezug auf die Figuren 5 bis 8 eine beispielhafte Ausführungsform eines erfindungsgemäßen Verfahrens zur Ansteuerung des Heckrotors 5 und einer erfindungsgemäßen Steuerungsdatenbereitstellungseinheit beschrieben.

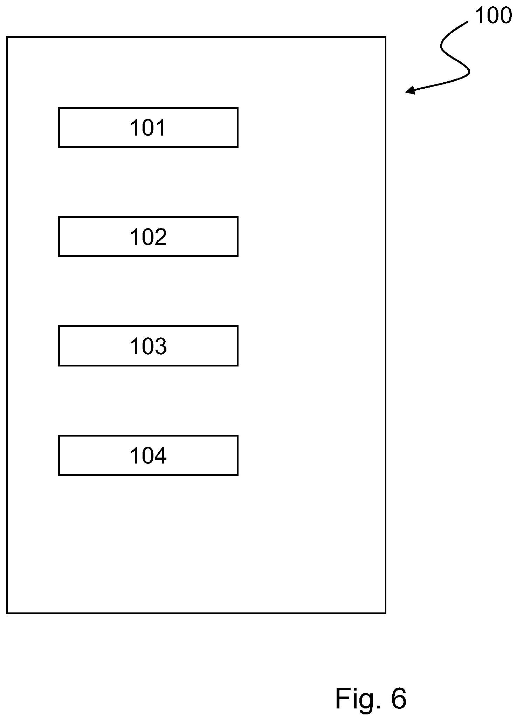

Die in Fig. 6 gezeigte Steuerungsdatenbereitstellungseinheit 100 ist außerhalb des Hubschraubers 1 vorgesehen, um das in Fig. 5 dargestellte Verfahren durchzuführen. Hierbei ist der Hubschrauber 1 oder zumindest dessen Heckrotor 5 in einer Testumgebung, beispielsweise an oder in einem Prüfstand, angeordnet. Die Testumgebung weist einen oder mehrere Schallsensoren oder Messgeräte zur Erfassung des Schalldrucks z.B. im Zeitbereich, welche an in Bezug auf die Position des Heckrotors in dem Prüfstand vorab festgelegten Positionen angeordnet sind. Der oder die Schallsensoren bzw. Messgeräte sind zur Messung eines von dem Heckrotor 5 in der Testumgebung abgegebenen Schalldrucks, z.B. als ein oder mehrere Mikrofone, ausgebildet. Die zeitliche Auflösung (Samplingrate) des Schalldrucks ist dabei so zu wählen, dass alle relevanten Frequenzen des akustischen Signals aufgelöst werden können. Durch eine nachgeschaltete Datenverarbeitungsroutine (Post-processing) lassen sich aus dem gemessenen Signal nachträglich die gewünschten Schallkennzahlen ermitteln. Eine Schallkennzahl kann beispielsweise eine Tonalität oder ein Gesamtpegel der Schallemission des Heckrotors 5 sein.

Die Steuerungsdatenbereitstellungseinheit 100 umfasst eine Festlegungseinheit 101, welche in einem ersten Schritt 51 zumindest zwei verschiedene Betriebsparameterwertepaare, jeweils umfassend eine Drehzahl und einen Blattanstellwinkel des Heckrotors für denselben Wert des dadurch generierten Schubs des Heckrotors, festlegt. Vorzugsweise werden mehr als zwei verschiedene Betriebsparameterwertepaare festgelegt, sowie jeweilige Betriebsparameterwertepaare für verschiedene Schubwerte.

Anschließend wird in einem zweiten Schritt 52 der Heckrotor 5 in der Testumgebung entsprechend den jeweiligen Betriebsparameterwertepaaren angesteuert und durch den zumindest einen oder mehrere Schallsensoren bzw. Messgeräte wird der Schalldruck für den jeweiligen Betriebszustand gemessen. Anschließend wird eine Schallkennzahl, beispielsweise eine Tonalität oder ein Gesamtpegel der Schallemission des Heckrotors 5, für das jeweilige Betriebsparameterwertepaar in der Testanordnung aus dem gemessenen Schalldruck ermittelt. Basierend auf den gemessenen Schallemissionen und den daraus abgeleiteten Schallkennzahlen ermittelt eine Ermittlungseinheit 102 der Steuerungsdatenbereitstellungseinheit 100 dann für jedes Betriebsparameterwertepaar eine Schallkennzahl. Diese kann die Schallkennzahl selbst sein, oder eine Kennzahl, welche z.B. unter Berücksichtigung mehrerer Messwerte verschiedener Schallsensoren bzw. Messgeräte und/oder deren relativer Position zueinander oder in Bezug auf den Heckrotor berücksichtigt.

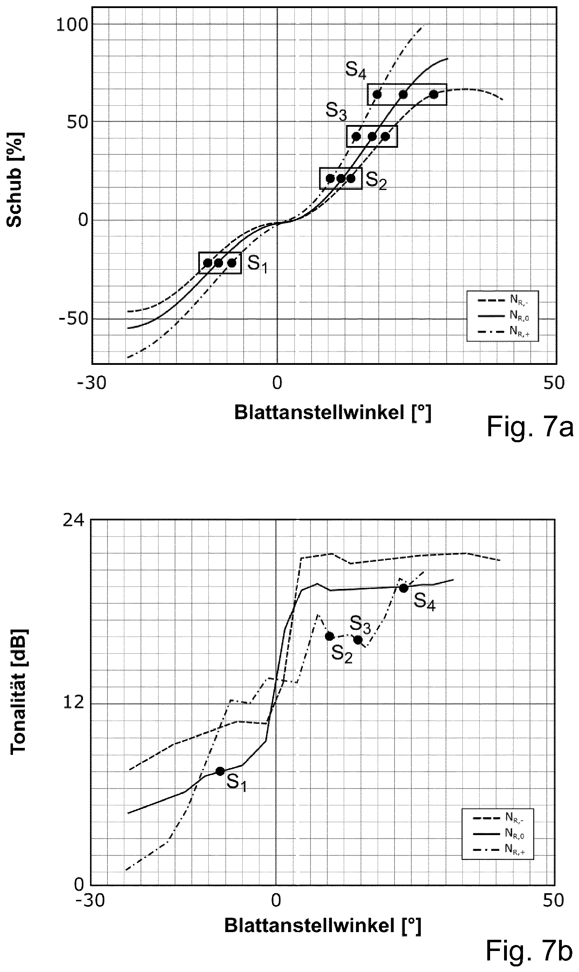

Hierzu können beispielsweise die Parameter Schub, Drehzahl und Blattanstellwinkel des Heckrotors 5 in der Testumgebung abgefahren werden und die jeweilige Schallemissionen gemessen werden. Ein derartiges Vorgehen ist rein beispielhaft anhand der Messkurven in Fig. 7a bis 7c gezeigt.

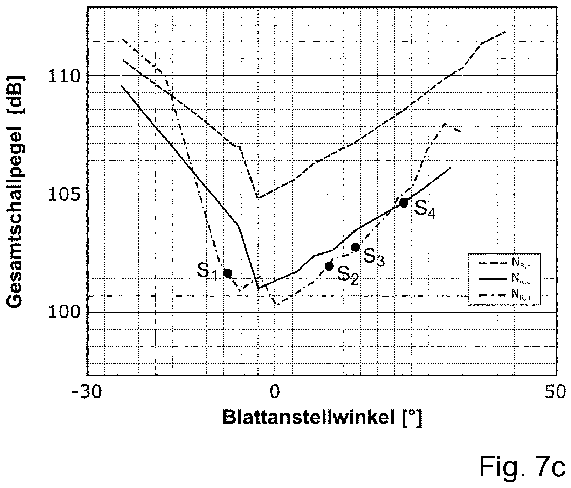

Fig. 7a stellt den Schub (Ordinatenachse in Fig. 7a) in Abhängigkeit des Anstellwinkels (Abszissenachse in Fig. 7a) für drei verschiedene Werte der Drehzahl dar. Mit anderen Worten wird das in Fig. 7a gezeigte Diagramm erzielt, indem an dem Heckrotor bei jeweils konstanter Drehzahl der Blattanstellwinkel verändert wird und der Schub als Funktion des Blattanstellwinkels gemessen wird. Die verschiedenen Werte der Drehzahl sind in Fig. 7a, ebenso wie in Fig. 7b und Fig. 7c, als N_{R,-} und N_{R,0} und N_{R,+} bezeichnet, wobei N_{R,0} einer Nenndrehzahl des Rotors entspricht (100%), und N_{R,+} entspricht 115% dieser Nenndrehzahl, und N_{R,-} entspricht 90% der Nenndrehzahl. In Fig. 7a-7c ist der Drehzahlwert N_{R,-} jeweils als eine gestrichelte Linie dargestellt, der Drehzahlwert N_{R, 0} als eine durchgezogene Linie, und der Drehzahlwert N_{R, +} durch eine strichpunktierte Linie. Der Schub ist in Fig. 7a in % eines maximal erzielbaren Schubes des Rotors angegeben. In Fig. 7a-7c ist der Blattanstellwinkel in Winkelgrad (°) angegeben.

Die Messung des Schubes (s. Fig. 7a) kann beispielsweise mittels eines geeigneten Kraftmessgeräts erfolgen, welches in Kontakt mit dem Rotor oder dessen Ummantelung vorgesehen ist und eine durch den Rotor erzeugte mechanischen Kraft erfasst.

Gleichzeitig oder in einem nachfolgenden Schritt wird, ebenfalls in Abhängigkeit des variierenden Blattanstellwinkels (Abszissenachse in Fig. 7b, 7c) bei jeweils konstanter Drehzahl der Schallwert (Ordinatenachse in Fig. 7b, 7c) gemessen. Dem Diagramm in Fig. 7b liegt eine gemessene Tonalität der Schallemission des Heckrotors 5 als Schallkennzahl zugrunde, während bei dem Diagramm in Fig. 7c ein Gesamtschallpegel als Schallkennzahl gemessen wurde. Die Tonalität (Fig. 7b) bzw. der Gesamtschallpegel (Fig. 7c) sind in vorliegendem Beispiel jeweils in dB angegeben. Die Tonalität kann insbesondere definiert sein als die Differenz eines Spitzenschallpegels und des Breitbandlärmpegels, wobei der Spitzenschallpegel an einer vorab festgelegten Frequenz des gemessenen Frequenzspektrums ermittelt wird oder ein arithmetisches Mittel aus den Differenzen mehrerer Spitzenschallpegel an festgelegten Frequenzen zum Breitbandlärmpegel. Beispielsweise können die vorab festgelegten Frequenzen der Spitzenschallpegel durch eine oder mehrere charakteristische Blattpassierfrequenzen der Rotorblätter festgelegt sein. Diese charakteristischen Blattpassierfrequenzen ergeben sich unter anderem aus der Anzahl der Rotorblätter, deren Winkelabstände zueinander und der Rotordrehzahl. Die arithmetische Mittelung kann insbesondere auf einen vorab festgelegten Frequenzbereich beschränkt sein, beispielsweise zwischen 300 Hz und 3000 Hz.

Die im ersten Schritt 51 festgelegten Betriebswertepaare und im zweiten Schritt 52 zugeordneten Schallkennzahlen werden dann in einem dritten Schritt 53 der Fig. 5 durch eine Speichereinheit 103 gespeichert, beispielsweise auf einem Speichermedium oder einem Datenträger der Steuerungsdatenbereitstellungseinheit 100. Im Beispiel der Fig. 7a bis 7c können beispielsweise die Diagramme selbst gespeichert werden, oder die den Diagrammen zugrundeliegenden Daten.

Anschließend wird aus der Mehrzahl der im dritten Schritt 53 gespeicherten Daten für einen festgelegten Schubwert des Heckrotors 5 jeweils ein Betriebsparameterwertepaar ausgewählt. Diese Auswahl erfolgt unter Zugrundelegung der ermittelten und gespeicherten Schallkennzahlen. Beispielsweise kann für einen bestimmten Schubwert dasjenige der Betriebsparameterwertepaare ausgewählt werden, für das die kleinste Schallkennzahl ermittelt wurde.

Dies wird nachfolgend am Beispiel der Diagramme der Fig. 7a bis 7c nochmals erläutert. In Fig. 7a sind vier unterschiedliche Schubwerte S₁, S₂, S₃ und S₄ gezeigt, wobei jeder der Schubwerte für jede der eingestellten Drehzahlen durch einen bestimmten Blattanstellwinkel erzielt wird, in Fig. 7a jeweils durch auf den Messkurven liegende Punkte (Schnittpunkt des jeweiligen Schubwerts mit der dem jeweiligen Drehzahlwert zugeordneten Messkurve) gekennzeichnet. Durch Vergleich mit den Diagrammen der Fig. 7b und 7c kann dann ermittelt werden, für welchen der Blattanstellwinkel bzw. Blattanstellwinkel-Drehzahl-Paare (Betriebsparameterwertepaare) die kleinste Tonalität der Schallemission des Heckrotors 5 (für Fig. 7b) bzw. der kleinste Gesamtschallpegel (für Fig. 7c) gemessen wurde, in Fig. 7b und 7c jeweils als ein Punkt, der mit dem jeweiligen Schubwert S₁, S₂, S₃ und S₄ bezeichnet ist, dargestellt. Mit anderen Worten kennzeichnen die Punkte S₁, S₂, S₃ und S₄ in Fig. 7b und 7c jeweils die Blattanstellwinkel-Drehzahl-Paare (Betriebsparameterwertepaare), die den kleinsten Wert von Tonalität (Fig. 7b) bzw. Gesamtschallpegel (Fig. 7c) aufweisen.

Anschließend werden in einem vierten Schritt 54 durch eine Ausgabeeinheit 104 Steuerungsdaten zum Ansteuern des Heckrotors 5 im Flugbetrieb des Hubschraubers 1 ausgegeben, welche für einen zu erzielenden Schubwert des Heckrotors 5 das jeweilige im Schritt 53 ausgewählte Betriebsparameterwertepaar zur Ansteuerung des Heckrotors 5 angeben. Im Beispiel der Fig. 7a-7c kann beispielsweise das Betriebsparameterwertepaar ausgegeben werden, bei dem für den jeweiligen Schubwert die Tonalität der Schallemission des Heckrotors 5 minimiert wird (für Fig. 7b) bzw. der Gesamtschallpegel minimiert wird (für Fig. 7c).

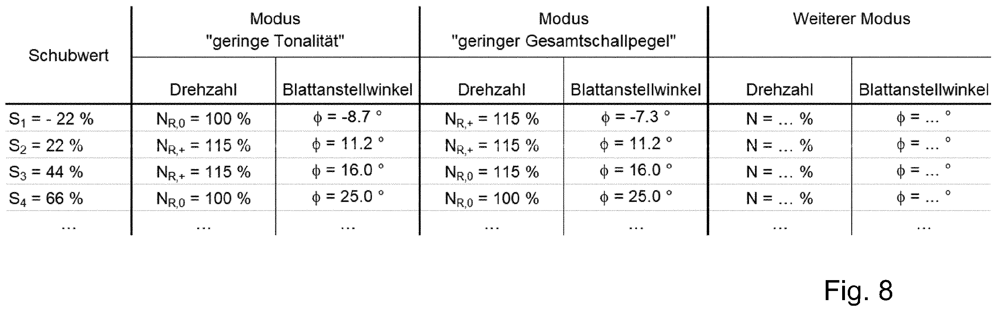

Die ausgegebenen Steuerungsdaten können beispielsweise in Form einer Tabelle hinterlegt sein. Hierzu können auch unterschiedliche Schallkennzahlen und entsprechende Betriebsparameterwertepaare zur Festlegung verschiedener Betriebsmodi des Hubschraubers 1 hinterlegt werden. Fig. 8 zeigt eine rein beispielhafte Tabelle, der die in Bezug auf die Fig. 7a-7c beschriebenen Messungen zugrunde liegen. Für vorab festgelegte Schubwerte S₁, S₂, S₃, S₄... werden in den oben beschriebenen Schritten 51 bis 54 jeweilige Betriebsparameterwertepaare der Drehzahl N und des Blattanstellwinkels Φ ermittelt, mit denen eine Verringerung der Tonalität der Schallemission erzielt wird (Modus "Geringe Tonalität") bzw. eine Verringerung des Gesamtschallpegels erzielt wird (Modus "Geringer Gesamtschallpegel"), sowie gegebenenfalls weitere Kriterien der Schallcharakteristik erfüllt werden. Damit werden unterschiedliche Betriebsmodi für den Heckrotor 5 festgelegt, in Fig. 8 beispielsweise ein Betriebsmodus zur Verringerung der Tonalität der Schallemission und ein Betriebsmodus zur Verringerung des Gesamtschallpegels. Mit anderen Worten listet die Tabelle in Fig. 8 die mittels der in Bezug auf Fig. 7b und Fig. 7c anhand der Punkte S₁, S₂, S₃ und S₄ ermittelten Blattanstellwinkel-Drehzahl-Paare (Betriebsparameterwertepaare) auf.

Im Flugbetrieb des Hubschraubers 1 kann der Heckrotor 5 gemäß den in der Tabelle in Fig. 8 hinterlegten Werten angesteuert werden, d.h. für einen anvisierten Schubwert des Heckrotors je nach Betriebsmodus entsprechend dem hierfür in der Tabelle hinterlegten Betriebsparameterwertepaar angesteuert werden. Die Auswahl eines Betriebsmodus kann dabei durch einen Piloten erfolgen oder automatisch z.B. durch die Steuereinheit 8.

Beispielsweise sind im Schwebeflug des Hubschraubers 1, d.h. in einem Zustand des Hubschraubers, in dem dieser an im Wesentlichen unveränderter Horizontal- und Vertikalposition verbleibt, erhöhte Blattlasten des Heckrotors 5 erforderlich, was in der Regel mit einer Dominanz der tonalen Schallkomponente einhergeht. Zudem verbleibt der Hubschrauber im Schwebeflug lange über derselben Bodenposition, sodass hier eine Verringerung der Schallemission besonders wünschenswert ist. Im Schwebeflug wird der Heckrotor 5 daher bevorzugt gemäß dem oben beschriebenen Betriebsmodus "Geringe Tonalität" betrieben.

In dem oben in Bezug auf die Fig. 5 beschriebenen Verfahren ist es nicht erforderlich, alle erforderlichen Werte, d.h. insbesondere Schubwerte, Betriebsparameterwertepaare und Schallkennzahlen durch Messungen zu ermitteln. Vielmehr ist es auch möglich nur einige dieser Werte messtechnisch zu ermitteln, und durch eine Interpolation und/oder numerische Simulation weitere Werte zu generieren. Damit kann ein erforderlicher Messaufwand verringert werden.

Beispielsweise können die in Fig. 7a-7c gezeigten Kurven alternativ zu der oben beschriebenen Messung anhand kontinuierlich abgefahrener Blattanstellwinkel auch basierend auf mehreren diskreten Werten der Blattanstellwinkel und entsprechenden Schubwerten und Schallkennzahlen ermittelt werden, wobei aus den diskreten Messewerten durch Interpolation die in den Figuren gezeigten stetigen Funktionen generiert werden.

Auch können zusätzliche Werte anhand einer numerischen Simulation generiert werden. Eine numerische Simulation kann beispielsweise die Simulation des Strömungsfeldes des Heckrotors 5 im Betrieb und eine Berechnung der diesem Strömungsfeld zugrundeliegenden akustischen Quellen beinhalten (numerische Simulation der Aerodynamik, auch als Computational Fluid Dynamics, cfd bezeichnet). Die numerische Strömungssimulation kann durch eine numerische Simulation der Akustik (Computational Aeroacoustics, caa) ergänzt werden, welche das Gesamtsystem des ummantelten Heckrotors 5, insbesondere Effekte der Hohlstruktur 25 der Ummantelung und/oder einen an der Ummantelung vorgesehenen Liner, und dessen Umströmung numerische berechnet. Beispiele für derartige numerische Simulationen sind in den eingangs genannten Dokumenten beschrieben.

In dem oben in Bezug auf Fig. 5 beschriebene Verfahren werden jeweilige Betriebsparameter zur Ansteuerung des Heckrotors 5 so gewählt, dass eine Verbesserung hinsichtlich des im Betrieb des Hubschraubers 1, d.h. während des Flugs, abgegebenen Schallemission erzielt werden kann. Dabei kann das Verfahren unter Berücksichtigung weiterer zu erzielenden Wirkungen bzw. Optimierungspunkten ergänzt, d.h. die Auswahl der jeweilige Betriebsparameter zur Ansteuerung des Heckrotors 5 entsprechend geändert werden. Beispielsweise kann die Tonalität der Schallemission oder der Gesamtschallpegel unter einem bestimmten Aspekt, wie z.B. eine Flughöhe des Hubschraubers 1, einen Abstand zum Empfänger etc., optimiert werden. Hierfür kann beispielsweise eine Berechnung der Schallsignatur auf dem Boden durch ein geeignetes numerisches Modell bestimmt werden.

Gemäß einer Weiterbildung der vorliegenden Erfindung können das oben in Bezug auf Fig. 5 beschriebene Verfahren und die oben in Bezug auf Fig. 6 beschriebene Steuerungsdatenbereitstellungseinheit auch bei einem Hubschrauber, bzw. allgemein einem Fluggerät, mit mehr als einem ummantelten Rotor angewandt werden. Das Fluggerät weist hierfür zumindest einen weiteren (im Folgenden: zweiten) Rotor auf, welcher mit einer Ummantelung versehen ist und dessen Drehzahl und ein Blattanstellwinkel unabhängig, insbesondere unabhängig von dem ersten Rotor, einstellbar sind. Der zweite Rotor ist, ebenso wie der erste Rotor, zumindest dazu ausgebildet, ein auf das Fluggerät wirkende Drehmoment auszugleichen oder zumindest zu verringern. Die oben beschriebenen Schritte des Ermittelns von Betriebsparameterwertepaaren und/oder Schubwerten und/oder Schallkennzahlen können für jeden der Rotoren einzeln durchgeführt werden, oder unter Berücksichtigung eines durch die Mehrzahl von Rotoren erzielten Gesamtschubs, beispielsweise eines Gesamtvorschubs, und/oder Gesamtschallwertes. Die Möglichkeit der Kombination verschiedener Rotoren kann ein weiterer Freiheitsgrad für die Schalloptimierung bereitgestellt werden.

Der erste und/oder zweite Rotor müssen nicht als ein Heckrotor ausgebildet sein, sondern können auch an jeder anderen geeigneten Position des Fluggeräts vorgesehen sein. Allgemein können sie daher auch als Sekundär-Rotor bezeichnet werden, insbesondere wenn sie neben einem Hauptrotor des Fluggeräts bereitgestellt sind, oder allgemein als Rotor. Der erste und/oder zweite Rotor können neben dem Drehmomentausgleich auch dem Erzeugen eines dynamischen Auftriebs und/oder einer Horizontalbewegung des Fluggeräts dienen. Alternativ zur Ausbildung als ein Hubschrauber kann das Fluggerät auch ein anderes Fluggerät, beispielsweise ein Flugtaxi, eVTOL (electric Vertical Take-Off and Landing aircraft), oder eine Drohne sein.

## Patentansprüche

1. Verfahren zur Ansteuerung zumindest eines Rotors (5) eines Fluggeräts (1), wobei
der Rotor (5) dazu ausgebildet ist, ein auf das Fluggerät (1) wirkendes Drehmoment auszugleichen oder zumindest zu verringern,
der Rotor (5) mit einer Ummantelung (15) versehen ist, und
wobei eine Drehzahl des Rotors und ein Anstellwinkel zumindest eines Rotorblattes (20) des Rotors für den Rotor (5) einstellbar sind, insbesondere unabhängig von einem weiteren an dem Fluggerät (1) vorgesehenen Rotor (3),
wobei das Verfahren die folgenden Schritte umfasst:
(a) Festlegen (51) zumindest eines ersten Betriebsparameterwertepaars und zumindest eines zweiten Betriebsparameterwertepaars des Rotors (5), welche jeweils unterschiedliche Drehzahlen und Anstellwinkel des Rotors bei einem gleichen dadurch erzielten Schubwert spezifizieren,
(b) Ermitteln (52) einer ersten Schallkennzahl für das erste Betriebsparameterwertepaar und einer zweiten Schallkennzahl für das zweite Betriebsparameterwertepaar, wobei das Ermitteln eine Messung eines Schallwerts des Rotors (5) in einer Testanordnung umfasst,
(c) Speichern (53) der ersten und zweiten Schallkennzahlen unter Zuordnung zu dem jeweiligen Betriebsparameterwertepaar, und
(d) Ansteuern (54) des Rotors (5) im Betrieb des Fluggeräts (1), unter Bezugnahme auf die im Schritt c) gespeicherte Zuordnung und in Abhängigkeit der selektiv zu erzielenden zumindest ersten oder zweiten Schallkennzahl, gemäß dem ersten Betriebsparameterwertepaar oder dem zweiten Betriebsparameterwertepaar.

2. Verfahren nach Anspruch 1, wobei die Schritte a) bis c) für mehr als zwei Betriebsparameterwertepaare und entsprechende Schallkennzahlen durchgeführt werden.

3. Verfahren nach Anspruch 1 oder 2, wobei die Schritte a) bis c) für mehrere zu erzielende Schubwerte durchgeführt werden.

4. Verfahren nach einem der Ansprüche 1 bis 3, wobei die Zuordnung in Schritt c) eine graphische und/oder tabellarische Darstellung der Schallkennzahlen in Abhängigkeit der Drehzahlen und/oder der Anstellwinkel des Rotors (5) und/oder der dadurch erzielten Schubwerte umfasst.

5. Verfahren nach einem der Ansprüche 1 bis 4, wobei die im Schritt c) gespeicherte Zuordnung durch weitere Schallkennzahlen und/oder Betriebsparameterwertepaare und/oder Schubwerte ergänzt wird, die in einer numerischen Simulation und/oder durch Interpolation ermittelt werden.

6. Verfahren nach einem der Ansprüche 1 bis 5, wobei im Schritt d) die der Ansteuerung des Rotors (5) zugrundeliegende Schallkennzahl so gewählt wird, dass eine Verringerung einer Schallemission des Rotors (5) erzielt wird.

7. Verfahren nach einem der Ansprüche 1 bis 6, wobei die Schallkennzahlen eine Tonalität und/oder einen Gesamtpegel einer Schallemission des Rotors (5) umfassen.

8. Verfahren nach einem der Ansprüche 1 bis 7, wobei das Verfahren unter Verwendung eines Rotors (5) durchgeführt wird, dessen Ummantelung (15) durch eine in Bezug auf eine Rotationsachse (R) des Rotors umlaufende Hohlstruktur (25) gebildet ist, wobei die Hohlstruktur vorzugsweise auf einer dem Rotor (5) zugewandten Umlauffläche (23) zumindest abschnittsweise einen gasdurchlässigen Bereich (23a) aufweist, wobei weiter bevorzugt die Hohlstruktur so ausgebildet ist, dass durch den gasdurchlässigen Bereich in die Hohlstruktur eindringende akustische Wellen zumindest einer Frequenz durch die Hohlstruktur zumindest teilweise absorbiert werden.

9. Verfahren nach einem der Ansprüche 1 bis 8, wobei die Messung eines Schallwerts des Rotors (5) im Schritt (b) an einem Prüfstand durchgeführt wird, wobei zumindest ein Messgerät zur Erfassung des Schallwerts an einer vorab festgelegten Position in Bezug auf die Position des Rotors (5) in dem Prüfstand angeordnet ist.

10. Verfahren nach einem der Ansprüche 1 bis 9, wobei das Fluggerät als ein Hubschrauber ausgebildet ist und der Rotor ein Sekundär-Rotor ist, der zum Drehmomentenausgleich und einer Steuerung um eine Gierachse ausgebildet ist, vorzugsweise ein Heckrotor (5) des Hubschraubers ist.

11. Verfahren nach Anspruch 10, wobei der Hubschrauber einen separaten Antrieb (6), insbesondere einen Elektromotor, umfasst, der dazu ausgebildet ist, den Sekundär-Rotor gemäß einer vorgegebenen Drehzahl in Drehung zu versetzen.

12. Verfahren nach einem der Ansprüche 1 bis 11, wobei der Rotor ein erster Rotor des Fluggeräts ist und das Fluggerät zumindest einen zweiten Rotor umfasst, der dazu ausgebildet ist, ein auf das Fluggerät wirkendes Drehmoment auszugleichen oder zumindest zu verringern, wobei der zweite Rotor mit einer Ummantelung versehen ist, und eine Drehzahl des zweiten Rotors und ein Anstellwinkel zumindest eines Rotorblattes des zweiten Rotors, vorzugsweise ein einheitlicher Anstellwinkel aller Rotorblätter des zweiten Rotors, für den zweiten Rotor unabhängig von dem ersten Rotor einstellbar sind, und wobei vorzugsweise die Schritte a) bis d) für den ersten und den zumindest zweiten Rotor separat durchgeführt werden oder unter Messung eines Gesamtschallwerts der zumindest zwei Rotoren.

13. Steuerungsdatenbereitstellungseinheit für ein Fluggerät (1) mit zumindest einem Rotor (5), wobei
der Rotor (5) dazu ausgebildet ist, ein auf das Fluggerät (1) wirkendes Drehmoment auszugleichen oder zumindest zu verringern,
der Rotor (5) mit einer Ummantelung (15) versehen ist, und
wobei eine Drehzahl des Rotors (5) und ein Anstellwinkel zumindest eines Rotorblattes (20) des Rotors für den Rotor (5) einstellbar sind, insbesondere unabhängig von einem weiteren an dem Fluggerät (1) vorgesehenen Rotor (3),
wobei die Steuerungsdatenbereitstellungseinheit (100) umfasst:
(a) eine Festlegungseinheit (101) zum Festlegen (51) zumindest eines ersten Betriebsparameterwertepaars und zumindest eines zweiten Betriebsparameterwertepaars des Rotors (5), welche jeweils unterschiedliche Drehzahlen und Anstellwinkel des Rotors bei einem gleichen dadurch erzielten Schubwert spezifizieren,
(b) eine Ermittlungseinheit (102) zum Ermitteln (52) einer ersten Schallkennzahl für das erste Betriebsparameterwertepaar und einer zweiten Schallkennzahl für das zweite Betriebsparameterwertepaar, wobei das Ermitteln eine Messung eines Schallwerts des Rotors (5) in einer Testanordnung umfasst ,
(c) eine Speichereinheit (103) zum Speichern (53) der ersten und zweiten Schallkennzahlen unter Zuordnung zu dem jeweiligen Betriebsparameterwertepaar, und
(d) eine Ausgabeeinheit (104) zum Ausgeben (54) von Steuerungsdaten zum Ansteuern des Rotors (5) im Betrieb des Fluggeräts (1), wobei die Steuerungsdaten, unter Bezugnahme auf die in der Speichereinheit gespeicherte Zuordnung und in Abhängigkeit der selektiv zu erzielenden zumindest ersten oder zweiten Schallkennzahl, die Ansteuerung des Rotors gemäß dem ersten Betriebsparameterwertepaar oder dem zweiten Betriebsparameterwertepaar spezifizieren.

14. Fluggerät, umfassend zumindest einen Rotor (5), der dazu ausgebildet ist, ein auf das Fluggerät (1) wirkendes Drehmoment auszugleichen oder zumindest zu verringern, wobei der Rotor (5) mit einer Ummantelung (15) versehen ist, und eine Drehzahl des Rotors (5) und ein Anstellwinkel zumindest eines Rotorblattes (20) des Rotors für den Rotor (5) einstellbar sind, insbesondere unabhängig von einem weiteren an dem Fluggerät (1) vorgesehenen Rotor (3),
wobei das Fluggerät weiter eine Steuereinheit (8) aufweist, die den zumindest einen Rotor (5) im Betrieb des Fluggeräts zumindest zeitweise mittels von einer Steuerungsdatenbereitstellungseinheit nach Anspruch 13 bereitgestellten Steuerungsdaten ansteuert und/oder gemäß Schritt (d) eines Verfahrens nach einem der Ansprüche 1 bis 12.

15. Fluggerät nach Anspruch 14, wobei die Ansteuerung des zumindest einen Rotors (5) zumindest im Schwebeflug des Fluggeräts mittels von der Steuerungsdatenbereitstellungseinheit bereitgestellten Steuerungsdaten und/oder gemäß dem Schritt (d) erfolgt.

## Claims

1. A method for controlling at least one rotor (5) of a flight vehicle (1), wherein
the rotor (5) is configured to compensate for or at least reduce a torque acting on the flight vehicle (1),
the rotor (5) is provided with a shroud (15), and
wherein a rotational speed of the rotor and an angle of attack of at least one rotor blade (20) of the rotor are adjustable for the rotor (5), in particular independently of a further rotor (3) provided on the flight vehicle (1),
wherein the method comprises the following steps:
(a) defining (51) at least a first pair of operating parameter values and at least a second pair of operating parameter values of the rotor (5), which respectively specify different rotational speeds and angles of attack of the rotor at the same thrust value achieved thereby,
(b) determining (52) a first sound index for the first pair of operating parameter values and a second sound index for the second pair of operating parameter values, wherein the determining comprises measuring a sound value of the rotor (5) in a test arrangement,
(c) storing (53) the first and second sound indices with assignment to the respective pair of operating parameter values, and
(d) controlling (54) the rotor (5) during operation of the flight vehicle (1), with reference to the assignment stored in step c) and as a function of the at least first or second sound index to be selectively achieved, in accordance with the first pair of operating parameter values or the second pair of operating parameter values.

2. The method of claim 1, wherein steps a) to c) are carried out for more than two pairs of operating parameter values and corresponding sound indices.

3. The method of claim 1 or 2, wherein steps a) to c) are carried out for several thrust values to be achieved.

4. The method of one of claims 1 to 3, wherein the assignment in step c) comprises a graphical and/or tabular representation of the sound indices as a function of the rotational speeds and/or the angles of attack of the rotor (5) and/or the thrust values achieved thereby.

5. The method of one of claims 1 to 4, wherein the assignment stored in step c) is supplemented by further sound indices and/or pairs of operating parameter values and/or thrust values, which are determined in a numerical simulation and/or by interpolation.

6. The method of one of claims 1 to 5, wherein in step d) the sound index on which the control of the rotor (5) is based is selected such that a reduction in a sound emission of the rotor (5) is achieved.

7. The method of one of claims 1 to 6, wherein the sound indices comprise a tonality and/or a total level of a sound emission of the rotor (5).

8. The method of one of claims 1 to 7, wherein the method is carried out using a rotor (5) whose shroud (15) is formed by a circumferential hollow structure (25) with respect to an axis of rotation (R) of the rotor, the hollow structure preferably having on a circumferential surface (23) facing the rotor (5) a region (23a) that is gas-permeable at least in sections thereof, the hollow structure further preferably being configured such that acoustic waves of at least one frequency penetrating into the hollow structure through the gas-permeable region are at least partially absorbed by the hollow structure.

9. The method of one of claims 1 to 8, wherein the measurement of a sound value of the rotor (5) in step (b) is carried out on a test station, wherein at least one measuring device for detecting the sound value is arranged at a predetermined position in relation to the position of the rotor (5) in the test station.

10. The method of one of claims 1 to 9, wherein the flight vehicle is designed as a helicopter and the rotor is a secondary rotor configured for torque compensation and control about a yaw axis, preferably a tail rotor (5) of the helicopter.

11. The method of claim 10, wherein the helicopter comprises a separate drive (6), in particular an electric motor, which is configured to set the secondary rotor in rotation according to a predetermined rotational speed.

12. The method of one of claims 1 to 11, wherein the rotor is a first rotor of the flight vehicle and the flight vehicle comprises at least a second rotor configured to compensate for or at least reduce a torque acting on the flight vehicle, wherein the second rotor is provided with a shroud, and a rotational speed of the second rotor and an angle of attack of at least one rotor blade of the second rotor, preferably a uniform angle of attack of all rotor blades of the second rotor, are adjustable for the second rotor independently of the first rotor, and wherein preferably steps a) to d) are carried out separately for the first and the at least second rotor or by measuring a total sound value of the at least two rotors.

13. A control data provision unit for a flight vehicle (1) having at least one rotor (5), wherein
the rotor (5) is configured to compensate for or at least reduce a torque acting on the flight vehicle (1),
the rotor (5) is provided with a shroud (15), and
wherein a rotational speed of the rotor (5) and an angle of attack of at least one rotor blade (20) of the rotor are adjustable for the rotor (5), in particular independently of a further rotor (3) provided on the flight vehicle (1),
wherein the control data provision unit (100) comprises:
(a) a defining unit (101) for defining (51) at least a first pair of operating parameter values and at least a second pair of operating parameter values of the rotor (5), which respectively specify different rotational speeds and angles of attack of the rotor at a same thrust value achieved thereby,
(b) a determination unit (102) for determining (52) a first sound index for the first pair of operating parameter values and a second sound index for the second pair of operating parameter values, wherein the determining comprises measuring a sound value of the rotor (5) in a test arrangement,
(c) a memory unit (103) for storing (53) the first and second sound indices with assignment to the respective pair of operating parameter values, and
(d) an output unit (104) for outputting (54) control data for controlling the rotor (5) during operation of the flight vehicle (1), the control data specifying, with reference to the assignment stored in the memory unit and as a function of the at least first or second sound index to be selectively achieved, the control of the rotor in accordance with the first pair of operating parameter values or the second pair of operating parameter values.

14. A flight vehicle, comprising at least one rotor (5) configured to compensate for or at least reduce a torque acting on the flight vehicle (1), the rotor (5) being provided with a shroud (15), and a rotational speed of the rotor (5) and an angle of attack of at least one rotor blade (20) of the rotor being adjustable for the rotor (5), in particular independently of a further rotor (3) provided on the flight vehicle (1),
wherein the flight vehicle further comprises a control unit (8) which controls the at least one rotor (5) during operation of the flight vehicle at least temporarily using control data provided by a control data provision unit according to claim 13 and/or according to step (d) of a method according to one of claims 1 to 12.

15. The flight vehicle of claim 14, wherein the control of the at least one rotor (5) is carried out at least during hover flight of the flight vehicle using control data provided by the control data provision unit and/or according to step (d).

## Revendications

1. Procédé de commande d'au moins un rotor (5) d'un aéronef (1),
le rotor (5) étant conçu pour compenser ou au moins pour réduire un couple agissant sur l'aéronef (1),
le rotor (5) étant pourvu d'une enveloppe (15), et
une vitesse de rotation du rotor et un angle d'attaque d'au moins une pale de rotor (20) du rotor étant réglables pour le rotor (5), en particulier indépendamment d'un autre rotor (3) prévu sur l'aéronef (1),
le procédé comprenant les étapes suivantes :
(a) définition (51) d'au moins une première paire de valeurs de paramètres de fonctionnement et d'au moins une deuxième paire de valeurs de paramètres de fonctionnement du rotor (5), qui spécifient respectivement des vitesses de rotation et angles d'attaque différents du rotor pour une valeur de poussée identique ainsi obtenue,
(b) détermination (52) d'un premier indice acoustique pour la première paire de valeurs de paramètres de fonctionnement et d'un deuxième indice acoustique pour la deuxième paire de valeurs de paramètres de fonctionnement, la détermination comprenant une mesure d'une valeur acoustique du rotor (5) dans un agencement de test,
(c) mémorisation (53) des premier et deuxième indices acoustiques avec association à la paire de valeurs de paramètres de fonctionnement respective, et
(d) commande (54) du rotor (5) pendant le fonctionnement de l'aéronef (1), en référence à l'association mémorisée à l'étape c) et en fonction de l'au moins premier ou deuxième indice acoustique à obtenir sélectivement, selon la première paire de valeurs de paramètres de fonctionnement ou la deuxième paire de valeurs de paramètres de fonctionnement.

2. Procédé selon la revendication 1, les étapes a) à c) étant réalisées pour plus de deux paires de valeurs de paramètres de fonctionnement et indices acoustiques correspondants.

3. Procédé selon la revendication 1 ou 2, les étapes a) à c) étant réalisées pour plusieurs valeurs de poussée à obtenir.

4. Procédé selon l'une quelconque des revendications 1 à 3, l'association à l'étape c) comprenant une représentation graphique et/ou tabulaire des indices acoustiques en fonction des vitesses de rotation et/ou des angles d'attaque du rotor (5) et/ou des valeurs de poussée ainsi obtenues.

5. Procédé selon l'une quelconque des revendications 1 à 4, l'association mémorisée à l'étape c) étant complétée par d'autres indices acoustiques et/ou paires de valeurs de paramètres de fonctionnement et/ou valeurs de poussée qui sont déterminées dans une simulation numérique et/ou par interpolation.

6. Procédé selon l'une quelconque des revendications 1 à 5, l'indice acoustique à la base de la commande du rotor (5) étant choisi à l'étape d) de telle sorte qu'une réduction d'une émission acoustique du rotor (5) soit obtenue.

7. Procédé selon l'une quelconque des revendications 1 à 6, les indices acoustiques comprenant une tonalité et/ou un niveau total d'une émission acoustique du rotor (5).

8. Procédé selon l'une quelconque des revendications 1 à 7, le procédé étant réalisé en utilisant un rotor (5) dont l'enveloppe (15) est formée par une structure creuse (25) périphérique par rapport à un axe de rotation (R) du rotor, la structure creuse présentant de préférence sur une surface périphérique (23) tournée vers le rotor (5) au moins en partie une région perméable aux gaz (23a), la structure creuse étant de manière davantage préférée réalisée de telle sorte que des ondes acoustiques d'au moins une fréquence pénétrant dans la structure creuse à travers la région perméable aux gaz soient au moins partiellement absorbées par la structure creuse.

9. Procédé selon l'une quelconque des revendications 1 à 8, la mesure d'une valeur acoustique du rotor (5) à l'étape (b) étant réalisée sur un banc d'essai, au moins un appareil de mesure pour la détection de la valeur acoustique étant disposé à une position prédéfinie par rapport à la position du rotor (5) dans le banc d'essai.

10. Procédé selon l'une quelconque des revendications 1 à 9, l'aéronef étant réalisé sous forme d'hélicoptère et le rotor étant un rotor secondaire qui est réalisé pour la compensation de couple et une commande autour d'un axe de lacet, de préférence un rotor arrière (5) de l'hélicoptère.

11. Procédé selon la revendication 10, l'hélicoptère comprenant un entraînement séparé (6), en particulier un moteur électrique, qui est réalisé pour mettre en rotation le rotor secondaire selon une vitesse de rotation prédéfinie.

12. Procédé selon l'une quelconque des revendications 1 à 11, le rotor étant un premier rotor de l'aéronef et l'aéronef comprenant au moins un deuxième rotor qui est réalisé pour compenser ou au moins pour réduire un couple agissant sur l'aéronef, le deuxième rotor étant pourvu d'une enveloppe, et une vitesse de rotation du deuxième rotor et un angle d'attaque d'au moins une pale de rotor du deuxième rotor, de préférence un angle d'attaque uniforme de toutes les pales de rotor du deuxième rotor, étant réglables pour le deuxième rotor indépendamment du premier rotor, et de préférence les étapes a) à d) étant réalisées séparément pour le premier et l'au moins deuxième rotor ou par mesure d'une valeur acoustique totale des au moins deux rotors.

13. Unité de fourniture de données de commande pour un aéronef (1) comprenant au moins un rotor (5),
le rotor (5) étant conçu pour compenser ou au moins pour réduire un couple agissant sur l'aéronef (1),
le rotor (5) étant pourvu d'une enveloppe (15), et
une vitesse de rotation du rotor (5) et un angle d'attaque d'au moins une pale de rotor (20) du rotor étant réglables pour le rotor (5), en particulier indépendamment d'un autre rotor (3) prévu sur l'aéronef (1),
l'unité de fourniture de données de commande (100) comprenant :
(a) une unité de définition (101) pour la définition (51) d'au moins une première paire de valeurs de paramètres de fonctionnement et d'au moins une deuxième paire de valeurs de paramètres de fonctionnement du rotor (5), qui spécifient respectivement des vitesses de rotation et angles d'attaque différents du rotor pour une valeur de poussée identique ainsi obtenue,
(b) une unité de détermination (102) pour la détermination (52) d'un premier indice acoustique pour la première paire de valeurs de paramètres de fonctionnement et d'un deuxième indice acoustique pour la deuxième paire de valeurs de paramètres de fonctionnement, la détermination comprenant une mesure d'une valeur acoustique du rotor (5) dans un agencement de test,
(c) une unité de mémorisation (103) pour la mémorisation (53) des premier et deuxième indices acoustiques avec association à la paire de valeurs de paramètres de fonctionnement respective, et
(d) une unité de sortie (104) pour la sortie (54) de données de commande pour la commande du rotor (5) pendant le fonctionnement de l'aéronef (1), les données de commande, en référence à l'association mémorisée dans l'unité de mémorisation et en fonction de l'au moins premier ou deuxième indice acoustique à obtenir sélectivement, spécifiant la commande du rotor selon la première paire de valeurs de paramètres de fonctionnement ou la deuxième paire de valeurs de paramètres de fonctionnement.

14. Aéronef, comprenant au moins un rotor (5) qui est réalisé pour compenser ou au moins pour réduire un couple agissant sur l'aéronef (1), le rotor (5) étant pourvu d'une enveloppe (15), et une vitesse de rotation du rotor (5) et un angle d'attaque d'au moins une pale de rotor (20) du rotor étant réglables pour le rotor (5), en particulier indépendamment d'un autre rotor (3) prévu sur l'aéronef (1),
l'aéronef comprenant en outre une unité de commande (8) qui commande l'au moins un rotor (5) pendant le fonctionnement de l'aéronef au moins temporairement au moyen de données de commande fournies par une unité de fourniture de données de commande selon la revendication 13 et/ou selon l'étape (d) d'un procédé selon l'une quelconque des revendications 1 à 12.

15. Aéronef selon la revendication 14, la commande de l'au moins un rotor (5) ayant lieu au moins pendant le vol stationnaire de l'aéronef au moyen de données de commande fournies par l'unité de fourniture de données de commande et/ou selon l'étape (d).
